# EUROPÄISCHE PATENTSCHRIFT

(11) **EP 3 781 839 B1**
(45) Veröffentlichungstag und Bekanntmachung des Hinweises auf die Patenterteilung: **08.03.2023**
(21) Anmeldenummer: 19720037.1
(22) Anmeldetag: 11.04.2019
(51) Int. Cl.: F16F 15/14

(54) **FLIEHKRAFTPENDEL**
CENTRIFUGAL PENDULUM
PENDULE À FORCE CENTRIFUGE

(30) Priorität: 20.04.2018 DE 102018109558
(43) Veröffentlichungstag der Anmeldung: 24.02.2021
(73) Patentinhaber: Schaeffler Technologies AG & Co. KG, 91074 Herzogenaurach (DE)
(72) Erfinder: KREMER, Florent, 67620 Soufflenheim (FR); RUSCH, Alain, 67760 Gambsheim (FR); FRANZ, Evgenij, 76437 Rastatt (DE); SCHNELL, Jonas, 76547 Sinzheim (DE)
(86) Internationale Anmeldenummer: PCT/DE2019/100334
(87) Internationale Veröffentlichungsnummer: WO 2019/201388

(56) Entgegenhaltungen:
- DE-A1-102014 211 711
- DE-A1-102016 223 192

## Beschreibung

Die vorliegende Erfindung betrifft ein Fliehkraftpendel gemäß dem Oberbegriff des Anspruchs 1, insbesondere ein Fliehkraftpendel für eine Reibungskupplung. Die Reibungskupplung ist insbesondere in einem Kraftfahrzeug einsetzbar, bevorzugt im Antriebsstrang eines Kraftfahrzeugs. Das Fliehkraftpendel ist insbesondere für eine Reduzierung von motorerregten Torsionsschwingungen vorgesehen. Das Fliehkraftpendel umfasst zumindest einen Flansch (als Schwungmasse) und eine Mehrzahl von Pendelmassen, die beweglich an dem Flansch angeordnet sind.

Eine Reibungskupplung umfasst regelmäßig zumindest eine Gegenplatte, eine gegenüber der Gegenplatte entlang einer axialen Richtung verlagerbare Anpressplatte und eine zwischen Gegenplatte und Anpressplatte anordenbare Kupplungsscheibe. Beim Einrücken der Reibungskupplung wird die Kupplungsscheibe mit Gegenplatte und Anpressplatte reibschlüssig verbunden, so dass ein Drehmoment z. B. von einer Verbrennungskraftmaschine über die Gegenplatte und Anpressplatte auf die Kupplungsscheibe und von der Kupplungsscheibe auf eine Nabe übertragbar ist. Beim Ausrücken der Reibungskupplung wird die reibschlüssige Verbindung gelöst. Die Nabe ist insbesondere mit einer Getriebeeingangswelle drehfest verbunden.

Ein Fliehkraftpendel wird insbesondere bei Reibungskupplungen eingesetzt, um die Übertragung von unerwünschten Schwingungen, in der Regel ausgehend von der Verbrennungskraftmaschine auf das angetriebene System, zumindest in vorbestimmten Frequenzbereichen zu unterdrücken. Die Pendelmassen können im Feld der Zentrifugalbeschleunigung Schwingungen entlang ihrer Laufbahnen ausführen, wenn sie von Momentenschwankungen einer Verbrennungskraftmaschine angeregt werden. Durch diese Schwingungen wird der Erregerschwingung zu passenden Zeiten Energie entzogen und wieder zugeführt, so dass es zu einer Beruhigung der Erregerschwingung kommt, wobei das Fliehkraftpendel dabei als Tilger wirkt. Da sowohl die Eigenfrequenz der Fliehkraftpendelschwingung als auch die Erregerfrequenz proportional zur Drehzahl sind, kann die Tilgerwirkung eines Fliehkraftpendels insbesondere über den ganzen Frequenzbereich erzielt werden.

Bei niedrigen Drehzahlen und den dabei auftretenden hohen Schwankungen der übertragenden Drehmomente der Verbrennungskraftmaschine kann es zum Anschlagen der Pendelmassen an einer Begrenzung des Schwingraums kommen. Dabei geht die Funktion eines Fliehkraftpendels verloren, so dass keine Schwingungsisolierung mehr gegeben ist.

Aus der DE 10 2010 049 553 A1 ist ein Fliehkraftpendel bekannt, bei der ein Schwingwinkel der Pendelmassen (entlang der Umfangsrichtung) durch Reibung reduziert wird. Dabei werden die Pendelmassen im inneren Bereich der Pendelmassen gegenüber einer axialen Richtung abgestützt.

Weiter ist aus der DE 10 2010 049 553 A1 bekannt, dass die Pendelmassen gegenüber dem Flansch über Rollen (Rollenkörper) beweglich gelagert sind. Diese Rollen sind dazu eingerichtet, zwischen einer Pendelmasse und der Lagerfläche (Anschlag) eines Flansches des Fliehkraftpendels angeordnet zu werden, so dass die Pendelmasse infolge einer eingehenden Vibration eine vordefinierte Tilgungsbewegung ausführen kann. Dabei rollt die Pendelmasse über den Rollabschnitt der Rolle ab. Über die Rolle ist die zumindest eine Pendelmasse beweglich an dem Flansch so fixiert, dass sie in einer axialen Richtung gesichert ist und in der Ebene normal zur Schwingachse entlang einer vorbestimmten Kurve schwingen kann. Die Schwungachse ist dabei die Drehachse der Reibungskupplung, so dass der Flansch um die Drehachse der Reibkupplung rotiert.

Aus der DE 10 2014 211 711 A1 ist ein Fliehkraftpendel bekannt, das auf den Oberbegriff des Anspruchs 1 lesbar ist.

Es besteht ein ständiges Bedürfnis, Fliehkraftpendel funktional und konstruktiv zu verbessern.

Der vorliegenden Erfindung liegt die Aufgabe zugrunde, ein Fliehkraftpendel vorzuschlagen, bei dem die Pendelmassen insbesondere gegenüber der axialen Richtung verbessert abgestützt werden können.

Diese Aufgabe wird gelöst mit einem Fliehkraftpendel gemäß den Merkmalen des unabhängigen Anspruchs 1. Weitere vorteilhafte Ausgestaltungen der Erfindung sind in den abhängig formulierten Ansprüchen angegeben. Die in den abhängig formulierten Ansprüchen einzeln aufgeführten Merkmale sind in technologisch sinnvoller Weise miteinander kombinierbar und können weitere Ausgestaltungen der Erfindung definieren. Darüber hinaus werden die in den Ansprüchen angegebenen Merkmale in der Beschreibung näher präzisiert und erläutert, wobei weitere bevorzugte Ausgestaltungen der Erfindung dargestellt werden.

Es wird ein Fliehkraftpendel vorgeschlagen, zumindest aufweisend mindestens einen Flansch und eine Mehrzahl von Pendelmassen (z. B. mindestens zwei, bevorzugt drei oder mehr), wobei die Pendelmassen zumindest entlang einer radialen Richtung gegenüber einer Drehachse und gegenüber dem Flansch beweglich an dem mindestens einen Flansch angeordnet sind. Die Pendelmassen sind über mindestens ein erstes Vorspannelement in einer axialen Richtung gegenüber dem mindestens einen Flansch vorgespannt. Die Pendelmassen weisen eine Erstreckung entlang der radialen Richtung zwischen einem innersten Punkt (am nächsten zur Drehachse) und einem äußersten Punkt (am weitesten von der Drehachse entfernt) der Pendelmassen auf. Das erste Vorspannelement kontaktiert die Pendelmassen in einem ersten Bereich, der entlang der radialen Richtung in einem Abstand, der höchstens 5 %, insbesondere höchstens 2 %, bevorzugt höchstens 1 % der Erstreckung beträgt, vom äußersten Punkt beabstandet angeordnet ist.

Ein Fliehkraftpendel wird insbesondere bei Reibungskupplungen eingesetzt, um die Übertragung von unerwünschten Schwingungen, in der Regel ausgehend von einer Verbrennungskraftmaschine auf das angetriebene System, zumindest in vorbestimmten Frequenzbereichen zu unterdrücken. Die Pendelmassen können im Feld der Zentrifugalbeschleunigung Schwingungen entlang ihrer Laufbahnen ausführen, wenn sie von Momentenschwankungen z. B. einer Verbrennungskraftmaschine angeregt werden. Durch diese Schwingungen wird der Erregerschwingung zu passenden Zeiten Energie entzogen und wieder zugeführt, so dass es zu einer Beruhigung der Erregerschwingung kommt, wobei das Fliehkraftpendel dabei als Tilger wirkt.

Eine Reibungskupplung umfasst insbesondere zumindest eine Gegenplatte, eine gegenüber der Gegenplatte entlang einer axialen Richtung verlagerbare Anpressplatte und eine zwischen Gegenplatte und Anpressplatte anordenbare Kupplungsscheibe. Beim Einrücken der Reibungskupplung wird die Kupplungsscheibe mit Gegenplatte und Anpressplatte reibschlüssig verbunden, so dass ein Drehmoment z. B. von einer Verbrennungskraftmaschine über die Gegenplatte und Anpressplatte auf die Kupplungsscheibe und von der Kupplungsscheibe auf eine Nabe übertragbar ist. Beim Ausrücken der Reibungskupplung wird die reibschlüssige Verbindung gelöst. Die Nabe ist insbesondere mit einer Getriebeeingangswelle drehfest verbunden oder bildet die Getriebeeingangswelle. Das Fliehkraftpendel kann z. B. an der Nabe oder direkt an der Getriebeeingangswelle angeordnet sein.

Vorliegend wird vorgeschlagen, dass das mindestens eine erste Vorspannelement mindestens eine der Pendelmassen möglichst weit außen (in der radialen Richtung) kontaktiert. Damit kann eine Abstützung der Pendelmassen gegenüber der axialen Richtung wirksam erfolgen.

Das (erste und/oder zweite) Vorspannelement dient einerseits der Abstützung der Pendelmasse in der axialen Richtung. Andererseits dient es dazu eine (vorbestimmbare) Reibwirkung einzustellen, so dass eine Verlagerung der Pendelmassen gegenüber dem Flansch entlang der Umfangsrichtung gebremst werden kann.

Insbesondere weist der Flansch eine (ringförmige) erste äußere Umfangslinie mit einem größten Durchmesser auf, wobei das mindestens eine erste Vorspannelement die Pendelmasse in einem ersten Bereich kontaktiert, der entlang der radialen Richtung außerhalb des größten Durchmessers angeordnet ist. Insbesondere ist dieses Merkmal auch unabhängig von der bereits beschriebenen Definition des ersten Bereichs realisierbar, demgemäß der erste Bereich entlang der radialen Richtung in einem Abstand, der höchstens 5 % der Erstreckung beträgt, vom äußersten Punkt beabstandet angeordnet ist.

Insbesondere ist der erste Bereich in der radialen Richtung außerhalb des Flansches angeordnet.

Das mindestens eine erste Vorspannelement kann ein ringförmiges Vorspannelement sein, das alle Pendelmassen kontaktiert. Insbesondere erstreckt sich das ringförmige Vorspannelement vollumfänglich um die Drehachse.

Insbesondere ist das mindestens eine (erste oder zweite) Vorspannelement über mindestens ein Reibelement (insbesondere aus einem Kunststoff) mit der Pendelmasse und/oder mit dem mindestens einen Flansch verbunden. Das Reibelement stellt vorbestimmte Gleitbedingungen (bzw. Reibwerte) sicher, so dass eine vorbestimmbare Bremswirkung hinsichtlich der Auslenkung der Pendelmassen entlang der Umfangsrichtung einstellbar ist.

Insbesondere kann der mindestens eine Flansch eine äußere Umfangslinie aufweisen, die in ersten Winkelbereichen entlang einer Umfangsrichtung zwischen den Pendelmassen verläuft und entlang der radialen Richtung einen kleineren ersten Durchmesser aufweist. Die äußere Umfangslinie verläuft (zudem) in zweiten Winkelbereichen entlang der Umfangsrichtung und ist (dabei) benachbart zu den Pendelmassen und zwischen den zweiten Winkelbereichen angeordnet und weist entlang der radialen Richtung einen größeren zweiten Durchmesser aufweist. Das mindestens eine erste Vorspannelement kontaktiert die Pendelmasse in dem zweiten Winkelbereich und entlang der radialen Richtung außerhalb des ersten Durchmessers.

Die äußere Umfangslinie erstreckt sich entlang der Umfangsrichtung also insbesondere auf zwei verschiedenen Durchmessern. Der Übergang zwischen den Durchmessern erfolgt insbesondere stetig (der Durchmesser verändert sich also ausgehend z. B. von dem kleineren Durchmesser hin zu dem größeren Durchmesser ausschließlich durch Vergrößerung oder weist teilweise einen gleichbleibenden Durchmesser auf - eine Verkleinerung des Durchmessers ist dabei gerade nicht umfasst).

Insbesondere kontaktiert das mindestens eine erste Vorspannelement den Flansch in der radialen Richtung außerhalb des ersten Durchmessers.

Insbesondere werden also Bereiche mit größerem zweitem Durchmesser am Flansch vorgehalten, so dass sich das mindestens eine erste Vorspannelement zur Abstützung der Pendelmasse hier abstützen kann.

Das mindestens eine erste Vorspannelement kontaktiert die Pendelmasse in der radialen Richtung weiter außen als den Flansch.

Insbesondere ist mindestens ein zweites Vorspannelement in der radialen Richtung innerhalb des ersten Vorspannelements angeordnet.

Insbesondere kann zumindest eine Pendelmasse so zusätzlich in einem inneren Bereich gegenüber der axialen Richtung abgestützt werden.

Zumindest das erste Vorspannelement (ggf. auch das zweite Vorspannelement) kann ein nicht elastischer Abstandshalter sein (also nicht elastisch verformbar). Bevorzugt ist das erste und/oder zweite Vorspannelement aber elastisch verformbar ausgeführt (Feder, Wellscheibe, z. B. Tellerfeder, Blattfeder, etc.).

Insbesondere weist das Fliehkraftpendel einen ersten Flansch und einen zweiten Flansch auf und die Mehrzahl der Pendelmassen sind entlang einer axialen Richtung dazwischen angeordnet. Alternativ kann ein Flansch vorgesehen sein, wobei die Mehrzahl der Pendelmassen auf einer Seite des Flansches oder beidseitig des Flansches angeordnet sind.

Insbesondere ist nur zwischen einem von erstem Flansch und zweitem Flansch und den Pendelmassen mindestens ein erstes und/oder zweites Vorspannelement angeordnet.

Es wird weiter eine Reibungskupplung vorgeschlagen, zumindest umfassend eine Gegenplatte, eine (gegenüber der Gegenplatte entlang der axialen Richtung verlagerbare) Anpressplatte und eine zwischen Gegenplatte und Anpressplatte angeordnete Kupplungsscheibe, wobei die Reibungskupplung zusätzlich zumindest das beschriebene Fliehkraftpendel aufweist Das Fliehkraftpendel ist insbesondere (über eine Nabe mit einer Getriebeeingangswelle und/oder) mit der Kupplungsscheibe verbunden..

Vorsorglich sei angemerkt, dass die hier verwendeten Zahlwörter ("erste", "zweite",...) vorrangig (nur) zur Unterscheidung von mehreren gleichartigen Gegenständen, Grö-ßen oder Prozessen dienen, also insbesondere keine Abhängigkeit und/oder Reihenfolge dieser Gegenstände, Größen oder Prozesse zueinander zwingend vorgeben. Sollte eine Abhängigkeit und/oder Reihenfolge erforderlich sein, ist dies hier explizit angegeben oder es ergibt sich offensichtlich für den Fachmann beim Studium der konkret beschriebenen Ausgestaltung.

Die Erfindung sowie das technische Umfeld werden nachfolgend anhand der Figuren näher erläutert. Es ist darauf hinzuweisen, dass die Erfindung durch die gezeigten Ausführungsbeispiele nicht beschränkt werden soll. Insbesondere ist es, soweit nicht explizit anders dargestellt, auch möglich, Teilaspekte der in den Figuren erläuterten Sachverhalte zu extrahieren und mit anderen Bestandteilen und Erkenntnissen aus der vorliegenden Beschreibung und/oder Figuren zu kombinieren. Insbesondere ist darauf hinzuweisen, dass die Figuren und insbesondere die dargestellten Größenverhältnisse nur schematisch sind. Gleiche Bezugszeichen bezeichnen gleiche Gegenstände, so dass ggf. Erläuterungen aus anderen Figuren ergänzend herangezogen werden können. Es zeigen:
- Fig. 1:: ein Fliehkraftpendel in einer Explosionsdarstellung in einer perspektivischen Ansicht;
- Fig. 2:: ein Fliehkraftpendel in einer Seitenansicht;
- Fig. 3:: eine erste Ausführungsvariante eines Fliehkraftpendels in einer Frontalansicht entlang der Drehachse;
- Fig. 4:: das Fliehkraftpendel gemäß Fig. 3 in einer Seitenansicht;
- Fig. 5:: eine zweite Ausführungsvariante eines Fliehkraftpendels in einer Frontalansicht entlang der Drehachse;
- Fig. 6:: das Fliehkraftpendel gemäß Fig. 5 in einer Seitenansicht; und
- Fig. 7:: eine Reibungskupplung mit einem Fliehkraftpendel in einer Seitenansicht.

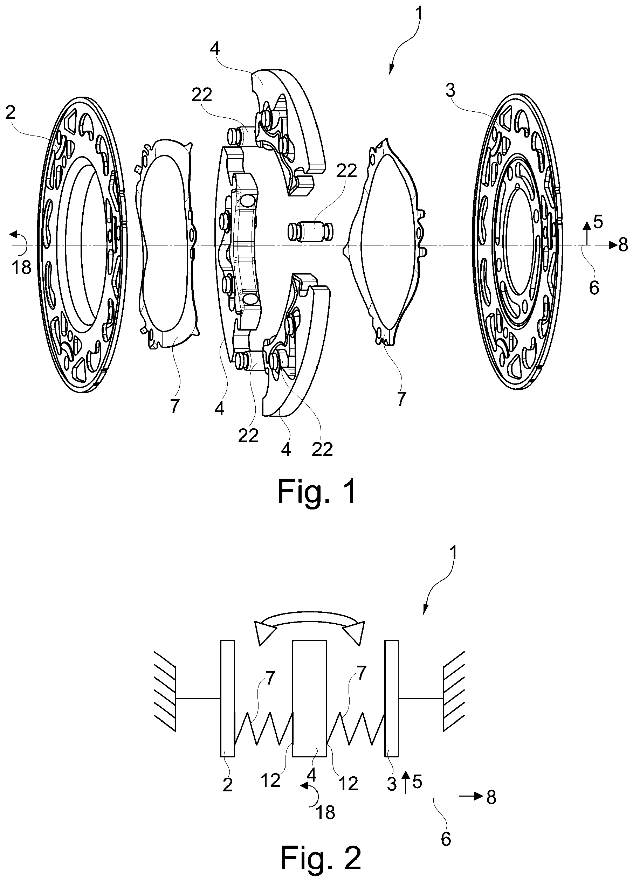

Fig. 1 zeigt ein Fliehkraftpendel 1 in einer Explosionsdarstellung in einer perspektivischen Ansicht. Fig. 2 zeigt ein Fliehkraftpendel 1 in einer Seitenansicht. Die Fig. 1 und 2 werden im Folgenden gemeinsam beschrieben.

Das Fliehkraftpendel 1 weist einen ersten Flansch 2, einen zweiten Flansch 3 und eine Mehrzahl (nämlich drei) von Pendelmassen 4 aufweist. Die Pendelmassen 4 sind entlang einer radialen Richtung 5 gegenüber der Drehachse 6 und gegenüber den Flanschen 2, 3 beweglich an den Flanschen 2, 3 angeordnet.

Die Pendelmassen 4 sind gegenüber den Flanschen 2, 3 über Rollen 22 beweglich gelagert. Diese Rollen 22 sind dazu eingerichtet, zwischen einer Pendelmasse 4 und der Lagerfläche der Flansche 2, 3 des Fliehkraftpendels 1 angeordnet zu werden, so dass die Pendelmasse 4 infolge einer eingehenden Vibration eine vordefinierte Tilgungsbewegung ausführen kann. Dabei rollt die Pendelmasse 4 über den Rollabschnitt der Rolle 22 ab. Über die Rolle 22 ist Pendelmasse 4 beweglich an den Flanschen 2, 3 so fixiert, dass sie in einer axialen Richtung 8 gesichert ist und in der Ebene normal zur Schwingachse (Drehachse 6) entlang einer vorbestimmten Kurve schwingen kann.

Das Fliehkraftpendel 1 umfasst weiter zwei erste Vorspannelemente 7, die eine Abstützung der Pendelmassen 4 gegenüber den Flanschen 2, 3 ermöglichen. Die ersten Vorspannelemente 7 dienen einerseits der Abstützung der Pendelmassen 4 in der axialen Richtung 8. Andererseits dienen sie dazu eine (vorbestimmbare) Reibwirkung einzustellen, so dass eine Verlagerung der Pendelmassen 4 gegenüber den Flanschen 2, 3 entlang der Umfangsrichtung 18 gebremst werden kann.

In Fig. 2 ist dargestellt, dass die Pendelmasse 4 beweglich gegenüber den (festen) Flanschen 2, 3 angeordnet ist. Dabei wird die Pendelmasse 4 gegenüber der axialen Richtung 8 über die ersten Vorspannelemente 7 (hier als Feder dargestellt) vorgespannt. Dabei ist in Abhängigkeit von der Kontaktierung der Vorspannelemente 7 an der Pendelmasse 4 eine Verkippung der Pendelmasse 4 möglich. Hier kontaktieren die ersten Vorspannelemente 7 die Pendelmasse 4 in einem in der radialen Richtung 5 innen liegendem ersten Bereich 12.

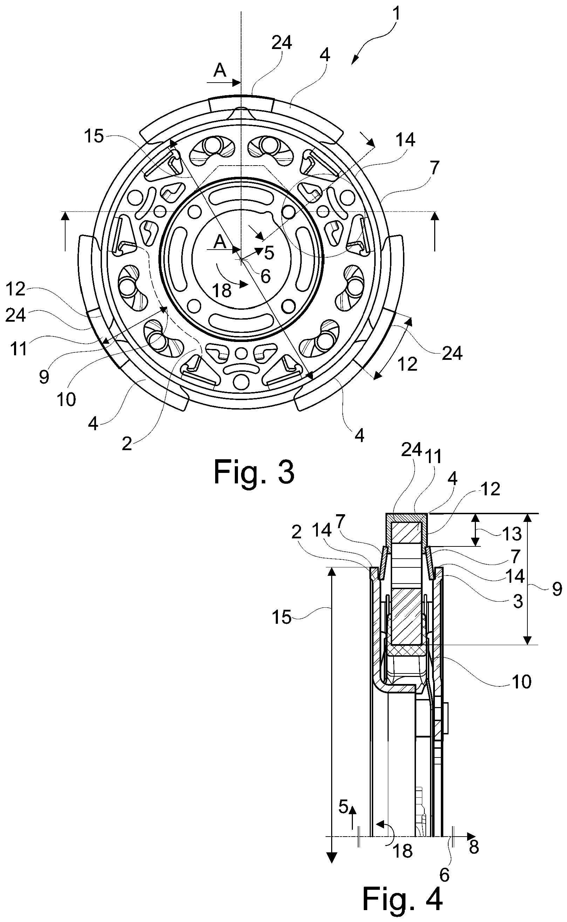

Fig. 3 zeigt eine erste Ausführungsvariante eines Fliehkraftpendels 1 in einer Frontalansicht entlang der Drehachse 6. Fig. 4 zeigt das Fliehkraftpendel 1 gemäß Fig. 3 in einer Seitenansicht. Die Fig. 3 und 4 werden im Folgenden gemeinsam beschrieben. Auf die Ausführungen zu Fig. 1 und 2 wird verwiesen.

Im Unterschied zur Darstellung gemäß Fig. 1 und 2 sind hier erste Vorspannelemente 7 vorgesehen, die die Pendelmassen in der radialen Richtung 5 weit außen kontaktieren. Das Fliehkraftpendel 1 umfasst einen ersten Flansch 2, einen zweiten Flansch 3 und eine Mehrzahl von Pendelmassen 4 (hier drei), wobei die Pendelmassen 4 zumindest entlang einer radialen Richtung 5 gegenüber einer Drehachse 6 und gegenüber den Flanschen 2, 3 beweglich an den Flansch 2, 3 angeordnet sind. Die Pendelmassen 4 sind über jeweils ein ringförmiges erstes Vorspannelement 7 in einer axialen Richtung 8 gegenüber jedem Flansch 2, 3 vorgespannt. Die Pendelmassen 4 weisen eine Erstreckung 9 entlang der radialen Richtung 5 zwischen einem innersten Punkt 10 (am nächsten zur Drehachse 6) und einem äußersten Punkt 11 (am weitesten von der Drehachse 6 entfernt) der Pendelmassen 4 auf. Jedes erste Vorspannelement 7 kontaktiert die Pendelmassen 4 in einem ersten Bereich 12, der entlang der radialen Richtung 5 in einem Abstand 13 vom äußersten Punkt 11 beabstandet angeordnet ist.

Die Flansche 2, 3 weisen eine (ringförmige) erste äußere Umfangslinie 14 mit einem größten Durchmesser 15 auf, wobei die ersten Vorspannelemente 7 die Pendelmasse 4 in einem ersten Bereich 12 kontaktieren, der entlang der radialen Richtung 5 außerhalb des größten Durchmessers 15 angeordnet ist.

Der erste Bereich 12 ist in der radialen Richtung 5 außerhalb der Flansche 2, 3 angeordnet.

Die ersten Vorspannelemente 7 sind jeweils ringförmige Vorspannelemente sein, die alle Pendelmassen 4 kontaktieren.

Vorliegend sind die ersten Vorspannelemente 7 über Reibelemente 24 mit der Pendelmasse 4 verbunden. Das Reibelement 24 stellt vorbestimmte Gleitbedingungen (bzw. Reibwerte) sicher, so dass eine vorbestimmbare Bremswirkung hinsichtlich der Auslenkung der Pendelmassen 4 entlang der Umfangsrichtung 18 einstellbar ist.

Die ersten Vorspannelemente 7 kontaktieren die Pendelmassen 4 in der radialen Richtung 5 weiter außen als den jeweiligen Flansch 2, 3.

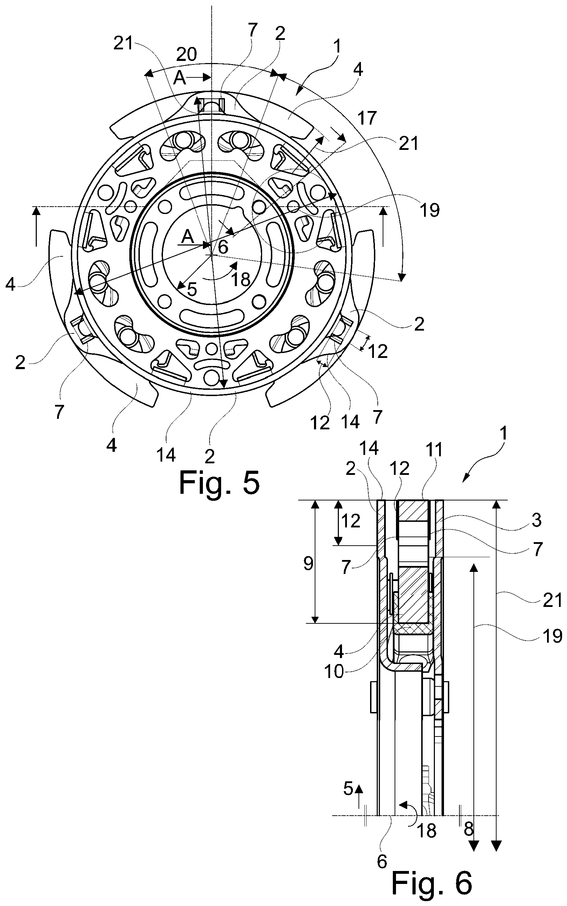

Fig. 5 zeigt eine zweite Ausführungsvariante eines Fliehkraftpendels 1 in einer Frontalansicht entlang der Drehachse 6. Fig. 6 zeigt das Fliehkraftpendel 1 gemäß Fig. 5 in einer Seitenansicht. Die Fig. 5 und 6 werden im Folgenden gemeinsam beschrieben. Auf die Ausführungen zu Fig. 3 und 4 wird verwiesen.

Im Unterschied zu Fig. 3 und 4 sind hier die Flansche 2, 3 sowie die ersten Vorspannelemente 7 anders ausgeführt. Die Flansche 2, 3 weisen eine äußere Umfangslinie 14 auf, die in ersten Winkelbereichen 17 entlang einer Umfangsrichtung 18 zwischen den Pendelmassen 4 verläuft und entlang der radialen Richtung 5 einen kleineren ersten Durchmesser 19 (kleineren ersten Radius) aufweist. Die äußere Umfangslinie 14 verläuft zudem in zweiten Winkelbereichen 20 entlang der Umfangsrichtung 18 und ist dabei benachbart zu den Pendelmassen 4 und zwischen den zweiten Winkelbereichen 20 angeordnet und weist entlang der radialen Richtung 5 einen größeren zweiten Durchmesser 21 (bzw. größeren zweiten Radius) auf. Die ersten Vorspannelemente 7 kontaktieren die Pendelmasse 4 in dem zweiten Winkelbereich 20 und entlang der radialen Richtung 5 außerhalb des ersten Durchmessers 19 (ersten Radius) in dem ersten Bereich 12.

Die äußere Umfangslinie 14 erstreckt sich entlang der Umfangsrichtung 18 auf zwei verschiedenen Durchmessern 19, 21. Der Übergang zwischen den Durchmessern 19, 21 erfolgt stetig.

Die ersten Vorspannelemente 7 sind hier als Federn ausgeführt, die am Flansch 2, 3 befestigt sind und sich von da aus entlang der axialen Richtung 8 hin zur Pendelmasse 4 erstrecken. Je Pendelmasse 4 und je Flansch 2, 3 ist ein erstes Vorspannelement 7 vorgesehen. Die ersten Vorspannelement 7 kontaktieren den Flansch 2, 3 in der radialen Richtung 5 außerhalb des ersten Durchmessers 19.

Hier werden also Bereiche mit größerem zweiten Durchmessern 21 am Flansch 2, 3 vorgehalten, so dass sich die ersten Vorspannelemente 7 zur Abstützung der Pendelmasse 4 hier abstützen können.

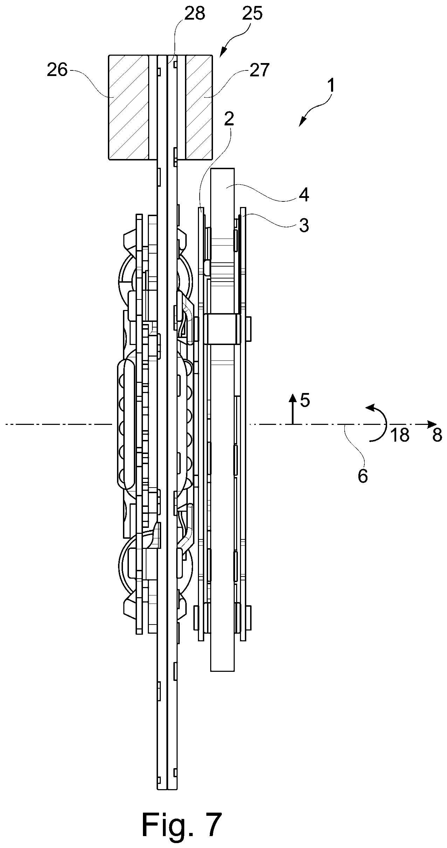

Fig. 7 zeigt eine Reibungskupplung 25 mit einem Fliehkraftpendel 1 in einer Seitenansicht. Die Reibungskupplung 25 umfasst eine Gegenplatte 26, eine gegenüber der Gegenplatte 26 entlang einer axialen Richtung 8 verlagerbare Anpressplatte 27 und eine zwischen Gegenplatte 26 und Anpressplatte 27 anordenbare Kupplungsscheibe 28. Beim Einrücken der Reibungskupplung 25 wird die Kupplungsscheibe 28 mit Gegenplatte 26 und Anpressplatte 27 reibschlüssig verbunden, so dass ein Drehmoment z. B. von einer Verbrennungskraftmaschine über die Gegenplatte 26 und Anpressplatte 27 auf die Kupplungsscheibe 28 und von der Kupplungsscheibe 28 auf eine Nabe übertragbar ist. Beim Ausrücken der Reibungskupplung 25 wird die reibschlüssige Verbindung gelöst. Die Nabe kann z. B. mit einer Getriebeeingangswelle drehfest verbunden sein. Das Fliehkraftpendel 1 ist über eine Nabe mit der Getriebeeingangswelle verbunden. Durch das Fliehkraftpendel 1 können auf die Kupplungsscheibe 28 übertragene Schwingungen zumindest reduziert werden.

### Bezugszeichenliste

- 1: Fliehkraftpendel
- 2: erster Flansch
- 3: zweiter Flansch
- 4: Pendelmasse
- 5: radiale Richtung
- 6: Drehachse
- 7: Vorspannelement
- 8: axiale Richtung
- 9: Erstreckung
- 10: innerster Punkt
- 11: äußerster Punkt
- 12: erster Bereich
- 13: Abstand
- 14: äußere Umfangslinie
- 15: größter Durchmesser
- 16: zweiter Bereich
- 17: erster Winkelbereich
- 18: Umfangsrichtung
- 19: erster Durchmesser
- 20: zweiter Winkelbereich
- 21: zweiter Durchmesser
- 22: zweites Vorspannelement
- 23: Rolle
- 24: Reibelement
- 25: Reibungskupplung
- 26: Gegenplatte
- 27: Anpressplatte
- 28: Kupplungsscheibe

## Patentansprüche

1. Fliehkraftpendel (1) zumindest aufweisend mindestens einen Flansch (2, 3) und eine Mehrzahl von Pendelmassen (4), wobei die Pendelmassen (4) zumindest entlang einer radialen Richtung (5) gegenüber einer Drehachse (6) und gegenüber dem Flansch (2, 3) beweglich an dem Flansch (2, 3) angeordnet sind; wobei die Pendelmassen (4) über mindestens ein erstes Vorspannelement (7) in einer axialen Richtung (8) gegenüber dem Flansch (2, 3) vorgespannt sind; wobei die Pendelmassen (4) eine Erstreckung (9) entlang der radialen Richtung (5) zwischen einem innersten Punkt (10) und einem äußersten Punkt (11) der Pendelmassen (4) aufweisen; wobei das erste Vorspannelement (7) die Pendelmassen (4) in einem ersten Bereich (12) kontaktiert, **dadurch gekennzeichnet, dass** der erste Bereich (12) entlang der radialen Richtung (5) in einem Abstand (13), der höchstens 5 % der Erstreckung (9) beträgt, vom äußersten Punkt (11) beabstandet angeordnet ist, und wobei das erste Vorspannelement (7) die Pendelmasse (4) in der radialen Richtung (5) weiter außen kontaktiert als den Flansch (2, 3).

2. Fliehkraftpendel (1) nach Anspruch 1, wobei der Flansch (2, 3) eine äußere Umfangslinie (14) mit einem größten Durchmesser (15) aufweist, wobei das erste Vorspannelement (7) die Pendelmasse (4) in dem ersten Bereich (12) kontaktiert, der entlang der radialen Richtung (5) außerhalb des größten Durchmessers (15) angeordnet ist.

3. Fliehkraftpendel (1) nach einem der vorhergehenden Ansprüche, wobei das erste Vorspannelement (7) ein ringförmiges Vorspannelement ist, das alle Pendelmassen (4) kontaktiert.

4. Fliehkraftpendel (1) nach Anspruch 1, wobei der Flansch (2, 3) eine äußere Umfangslinie (14) aufweist, die in ersten Winkelbereichen (17) entlang einer Umfangsrichtung (17) zwischen den Pendelmassen (4) verläuft und entlang der radialen Richtung (5) einen kleineren ersten Durchmesser (19) aufweist; und die in zweiten Winkelbereichen (20) entlang der Umfangsrichtung (17) verläuft und benachbart zu den Pendelmassen (4) und zwischen den zweiten Winkelbereichen (20) angeordnet ist und entlang der radialen Richtung (5) einen größeren zweiten Durchmesser (21) aufweist; wobei das erste Vorspannelement (7) die Pendelmasse (4) in dem zweiten Winkelbereich (20) und entlang der radialen Richtung (5) außerhalb des ersten Durchmessers (19) kontaktiert.

5. Fliehkraftpendel (1) nach Anspruch 4, wobei das erste Vorspannelement (7) den Flansch (2, 3) in der radialen Richtung (5) außerhalb des ersten Durchmessers (19) kontaktiert.

6. Fliehkraftpendel (1) nach einem der vorhergehenden Ansprüche, wobei mindestens ein zweites Vorspannelement (21) in der radialen Richtung (5) innerhalb des ersten Vorspannelements (7) angeordnet ist.

7. Fliehkraftpendel (1) nach einem der vorhergehenden Ansprüche, wobei das erste Vorspannelement (7) ein nicht elastischer Abstandshalter ist.

8. Fliehkraftpendel (1) nach einem der vorhergehenden Ansprüche, wobei das Fliehkraftpendel (1) einen ersten Flansch (2) und einen zweiten Flansch (3) aufweist und die Mehrzahl der Pendelmassen (4) entlang einer axialen Richtung (8) dazwischen angeordnet sind.

9. Reibungskupplung (25), zumindest umfassend eine Gegenplatte (26), eine Anpressplatte (27) und eine zwischen Gegenplatte (26) und Anpressplatte (27) angeordnete Kupplungsscheibe (28), wobei die Reibungskupplung (25) zusätzlich zumindest ein Fliehkraftpendel (1) nach einem der vorhergehenden Ansprüche aufweist.

## Claims

1. A centrifugal pendulum (1) at least having at least one flange (2, 3) and a plurality of pendulum masses (4), wherein the pendulum masses (4) are arranged on the flange (2, 3) for movement at least in a radial direction (5) relative to an axis of rotation (6) and relative to the flange (2, 3); wherein the pendulum masses (4) are preloaded with respect to the flange (2, 3) in an axial direction (8) by at least one first preloading element (7); wherein the pendulum masses (4) have an extension (9) in the radial direction (5) between an innermost point (10) and an outermost point (11) of the pendulum masses (4); wherein the first preloading element (7) contacts the pendulum masses (4) in a first region (12), **characterised in that** the first region (12) is arranged spaced apart from the outermost point (11) in the radial direction (5) at a distance (13), which is at most 5% of the extension (9), and wherein the first preloading element (7) contacts the pendulum mass (4) further outwards in the radial direction (5) than the flange (2, 3).

2. The centrifugal pendulum (1) according to claim 1, wherein the flange (2, 3) has an outer circumferential line (14) with a largest diameter (15), wherein the first preloading element (7) contacts the pendulum mass (4) in the first region (12) located in the radial direction (5) outside the largest diameter (15).

3. The centrifugal pendulum (1) according to any one of the preceding claims, wherein the first preloading element (7) is an annular preloading element that contacts all the pendulum masses (4).

4. The centrifugal pendulum (1) according to claim 1, wherein the flange (2, 3) has an outer circumferential line (14) which extends in first angular regions (17) in a circumferential direction (17) between the pendulum masses (4) and has a smaller first diameter (19) in the radial direction (5); and which extends in second angular regions (20) in the circumferential direction (17) and is arranged adjacent to the pendulum masses (4) and between the second angular regions (20) and has a larger second diameter (21) in the radial direction (5); wherein the first preloading element (7) contacts the pendulum mass (4) in the second angular region (20) and in the radial direction (5) outside of the first diameter (19).

5. The centrifugal pendulum (1) according to claim 4, wherein the first preloading element (7) contacts the flange (2, 3) in the radial direction (5) outside of the first diameter (19).

6. The centrifugal pendulum (1) according to any one of the preceding claims, wherein at least a second preloading element (21) is arranged in the radial direction (5) inside the first preloading element (7).

7. The centrifugal pendulum (1) according to any one of the preceding claims, wherein the first preloading element (7) is a non-elastic spacer.

8. The centrifugal pendulum (1) according to any one of the preceding claims, wherein the centrifugal pendulum (1) has a first flange (2) and a second flange (3) and the plurality of pendulum masses (4) is arranged in an axial direction (8) therebetween.

9. A friction clutch (25) at least comprising a counter plate (26), a pressure plate (27) and a clutch disc (28) arranged between the counter plate (26) and the pressure plate (27), wherein the friction clutch (25) also has at least one centrifugal pendulum (1) according to any one of the preceding claims.

## Revendications

1. Pendule à force centrifuge (1) présentant au moins une bride (2, 3) et une pluralité de masses pendulaires (4), dans lequel les masses pendulaires (4) sont disposées sur la bride (2, 3) de manière à être mobiles par rapport à un axe de rotation (6) et par rapport à la bride (2, 3) au moins le long d'une direction radiale (5) ; dans lequel les masses pendulaires (4) sont précontraintes par l'intermédiaire d'au moins un premier élément de précontrainte (7) dans une direction axiale (8) par rapport à la bride (2, 3) ; dans lequel les masses pendulaires (4) présentent une étendue (9) le long de la direction radiale (5) entre un point le plus intérieur (10) et un point le plus extérieur (11) des masses pendulaires (4) ; dans lequel le premier élément de précontrainte (7) est en contact avec les masses pendulaires (4) dans une première zone (12), **caractérisé en ce que** la première zone (12) est située à une certaine distance (13), qui atteint au plus 5 % de l'étendue (9), du point le plus extérieur (11) le long de la direction radiale (5) et dans lequel le premier élément de précontrainte (7) est en contact avec les masses pendulaires (4) dans la direction radiale (5) plus loin vers l'extérieur que la bride (2, 3).

2. Pendule à force centrifuge (1) selon la revendication 1, dans lequel la bride (2, 3) présente une ligne de contour externe (14) avec un diamètre le plus grand (15), dans lequel le premier élément de précontrainte (7) est en contact avec les masses pendulaires (4) dans la première zone (12), qui est située à l'extérieur du diamètre le plus grand (15) le long de la direction radiale (5).

3. Pendule à force centrifuge (1) selon l'une quelconque des revendications précédentes, dans lequel le premier élément de précontrainte (7) est un élément de précontrainte circulaire, qui est en contact avec toutes les masses pendulaires (4).

4. Pendule à force centrifuge (1) selon la revendication 1, dans lequel la bride (2, 3) présente une ligne de contour externe (14), qui s'étend dans des premières plages angulaires (17) le long d'une direction circonférentielle (17) entre les masses pendulaires (4) et présente le long de la direction radiale (5) un premier diamètre plus petit (19) ; et qui s'étend dans des secondes plages angulaires (20) le long de la direction circonférentielle (17) et est disposée adjacente aux masses pendulaires (4) et entre les secondes plages angulaires (20) et présente le long de la direction radiale (5) un second diamètre plus grand (21) ; dans lequel le premier élément de précontrainte (7) est en contact avec les masses pendulaires (4) dans la seconde plage angulaire (20) et le long de la direction radiale (5) à l'extérieur du premier diamètre (19).

5. Pendule à force centrifuge (1) selon la revendication 4, dans lequel le premier élément de précontrainte (7) est en contact avec la bride (2, 3) dans la direction radiale (5) à l'extérieur du premier diamètre (19).

6. Pendule à force centrifuge (1) selon l'une quelconque des revendications précédentes, dans lequel au moins un second élément de précontrainte (21) est disposé dans la direction radiale (5) à l'intérieur du premier élément de précontrainte (7).

7. Pendule à force centrifuge (1) selon l'une quelconque des revendications précédentes, dans lequel le premier élément de précontrainte (7) est un écarteur non élastique.

8. Pendule à force centrifuge (1) selon l'une quelconque des revendications précédentes, dans lequel le pendule à force centrifuge (1) présente une première bride (2) et une seconde bride (3) et la pluralité de masses pendulaires (4) sont disposées le long d'une direction axiale (8) entre celles-ci.

9. Embrayage à friction (25), comprenant au moins un contre-plateau (26), un plateau de pression (27) et un disque d'embrayage (28) disposé entre le contre-plateau (26) et le plateau de pression (27), dans lequel l'embrayage à friction (25) présente en outre au moins un pendule à force centrifuge (1) selon l'une quelconque des revendications précédentes.
